# NEUE EUROPÄISCHE PATENTSCHRIFT

(11) **EP 1 665 494 B2**
(45) Veröffentlichungstag und Bekanntmachung des Hinweises auf die Entscheidung über den Einspruch: **28.06.2023**
(45) Hinweis auf die Patenterteilung: 23.05.2012
(21) Anmeldenummer: 04764766.4
(22) Anmeldetag: 03.09.2004
(51) Int. Cl.: F03D 9/00, H02J 3/40

(54) **VERFAHREN ZUM BETRIEB BZW. REGELUNG EINER WINDENERGIEANLAGE SOWIE VERFAHREN ZUR BEREITSTELLUNG VON PRIMÄRREGELLEISTUNG MIT WINDENERGIEANLAGEN**
METHOD FOR OPERATING OR CONTROLLING A WIND TURBINE AND METHOD FOR PROVIDING PRIMARY CONTROL POWER BY MEANS OF WIND TURBINES
PROCÉDÉ POUR FAIRE FONCTIONNER OU RÉGULER UNE ÉOLIENNE ET PROCÉDÉ POUR METTRE À DISPOSITION UNE PUISSANCE DE RÉGULATION PRIMAIRE AU MOYEN D'ÉOLIENNES

(30) Priorität: 03.09.2003 DE 10341057; 05.09.2003 DE 10341504
(43) Veröffentlichungstag der Anmeldung: 07.06.2006
(60) Teilanmeldung: 10012671.3
(73) Patentinhaber: Siemens Gamesa Renewable Energy Service GmbH, 20097 Hamburg (DE)
(72) Erfinder: Fortmann, Jens, 13156 Berlin (DE)
(74) Vertreter: Glawe, Delfs, Moll
(86) Internationale Anmeldenummer: PCT/EP2004/009808
(87) Internationale Veröffentlichungsnummer: WO 2005/025026

(56) Entgegenhaltungen:
- EP-A- 0 244 341
- EP-B- 0 569 556
- DE-A1- 19 756 777
- US-A- 4 695 736
- US-B1- 6 252 753
- KONTOGIANNIS C C ET AL: "AN EFFICIENT POWER MANAGEMENT AND CONTROL IN WIND PARKS BY MEANS OF A RADIO TELEMETRY CONTROL SYSTEM" ELECTROMOTION, MEDIAMIRA, CLUJ-NAPOCA, RO, 19. Juni 2001 (2001-06-19), Seiten 461-465, XP001154444 ISSN: 1223-057X
- SIEGFRIED HEIER: "Windkraftanlagen im Netzbetrieb" 1996, B.G. TEUBNER STUTTGART , STUTTGART , XP002310439 Seite 96 - Seite 100
- CHRISTIANSEN P ET AL: "Grid Connection and Remote Control for the Horns Rev 150 MW Offshore Wind Farm in Denmark" INTERNATIONAL WORKSHOP ON TRANSMISSION NETWORKS FOR OFFSHORE WIND FARMS, XX, XX, März 2001 (2001-03), Seiten 1-11, XP002254252
- SVENSSON AND P KARLSSON J: "Wind Farm Control Software Structure" INTERNATIONAL WORKSHOP ON TRANSMISSION NETWORKS FOR OFFSHORE WIND FARMS, XX, XX, April 2002 (2002-04), Seiten 1-15, XP002254250
- HEIER S: "Windkraftanlagen im Netzbetrieb", WINDKRAFTANLAGEN IM NETZBETRIEB, 1 January 1996 (1996-01-01), pages 96-100,
- Transmission Code 2003 VDN

## Beschreibung

Die Erfindung bezieht sich auf Verfahren zum Betrieb mindestens einer Windenergieanlage mit einem Rotor, einem mit dem Rotor gekoppelten elektrischen Generator zum Abgeben elektrischer Leistung in ein Energieverteilungsnetz mit Hilfe einer Regeleinrichtung.

Die Offenbarung bezieht sich weiterhin auf ein Verfahren zum Bereitstellen von Regelleistung oder Primärregelleistung für ein elektrisches Energieerzeuger- und -verteilernetz, an welches eine Vielzahl von Kraftwerken, darunter Windenergieanlagen, und Verbraucher, angeschlossen ist.

Die Offenbarung bezieht sich ferner auf ein Verfahren zur Regelung einer Windenergieanlage, aufweisend mindestens einen einen Rotor und einen Generator umfassenden Triebstrang und einer Regeleinrichtung, wobei die Windenergieanlage eine bauartbedingte Mindestdrehzahl zur Netzeinspeisung aufweist.

Schließlich bezieht sich die Erfindung auch auf Windenergieanlagen.

Änderungen der Wirkleistungsabgabe eines Energieerzeugers, wie sie bei Windkraftanlagen üblich sind, führen in einem Energieverteilungsnetz zu Änderungen der Netzfrequenz, wenn nicht durch die Regelung anderer Kraftwerke sichergestellt werden kann, dass soviel Energie in das Netz gespeist wird, wie auch durch die angeschlossenen Verbraucher abgenommen wird. Durch den zunehmenden Anteil von Windkraftanlagen im Energieverteilungsnetz steigen für die Netzbetreiber die Kosten für das Ausregeln der durch die Windkraft verursachten Schwankungen der Einspeiseleistung.

Es ist ein Verfahren zum Betreiben einer Windenergieanlage mit einem von einem Rotor antreibbaren elektrischen Generator zum Abgeben elektrischer Leistung an ein elektrisches Netz bekannt (DE 100 22 974 A1). Hierbei wird die von dem Generator an das Netz abgegebene Leistung in Abhängigkeit der Netzfrequenz des elektrischen Netzes geregelt bzw. eingestellt, wobei bei einem Anstieg der Netzfrequenz die abgegebene Leistung heruntergeregelt wird. Hierbei geht es jedoch nicht um die Bereitstellung von Regelleistung und die vorgeschlagenen Maßnahmen wären hierfür auch ungeeignet.

Aus dem Dokument EP 0 569 556 B ist bekannt, dass bei Schwankungen der Windgeschwindigkeit die Abgabeleistung und die Windleistung nicht übereinstimmen müssen. Die Differenzleistung kommt aus der Drehzahländerung des Rotors verbunden mit einer Änderung der kinetischen Energie des Rotors.

In DE 197 56 777 A1 soll das Netz bei Störungen mit Hilfe einer Betriebsänderung der Windkraftanlage gestützt werden. Dabei wird aus diesem Dokument implizit klar, dass dies durch eine Änderung des Betriebspunkts erfolgen muss z.B. durch Veränderung des Blattwinkels. Man nimmt also einen gezielten Eingriff vor, um eine veränderte, insbesondere erhöhte, Abgabeleistung zu erreichen.

In eine ähnliche Richtung geht das Dokument "Primärregelung mit Windkraftanlagen" von Dr. Fred Prillwitz, Dipl--Ing. Axel Holst, Prof. Dr. Harald Weber; veröffentlicht vom Institut für Elektrische Energietechnik an der Universität Rostock. Auch hier wird die Windkraftanlage in einem Betriebspunkt betrieben, der nicht die maximale Leistung aus der verfügbaren Windenergie entnimmt. Bei einem Leistungsbedarf des Energieversorgungsnetzes wird der Betriebspunkt verändert, wobei sich Blattwinkel, Drehzahl und Leistungsabgabe verändern, um die maximal mögliche Windleistung in elektrische Leistung zu wandeln. Durch eine besonders dynamische Regelung können WKA die nach diesem Verfahren arbeiten an der Primärregelung teilnehmen.

Aus dem Dokument WO 03/023224 A1 ist es bekannt, eine Windenergieanlage mit einer Regeleinrichtung bereitzustellen, durch die das Verhalten von konventionellen Synchrongeneratoren bei Netzfrequenzänderungen nachgebildet wird unter Nutzung der kinetischen Energie des Windrotors.

Im Normalbetrieb eines Netzes ohne Windkraftanlagen ist die Einregelung unproblematisch, weil sich lediglich die Last bzw. die abgenommene Leistung ändert. Aber selbst in einem Netz mit konventionellen und mit Windkraftanlagen sind die erforderlichen Regelungsvorgänge zu bewältigen. Deutlich anders ist die Situation dann, wenn nicht vorhersehbare Störungen in einem gemischten Netz mit Windkraftanlagen auftreten, also etwa ein Leistungsausfall oder ein Spannungseinbruch als Folge eines Erdschlusses oder Kurzschlusses. Windkraftanlagen, so wie sie bisher betrieben werden, können in diesem Fall keine zusätzliche Leistung bereitstellen, wie konventionelle Kraftwerke dies tun können, um auf diese Weise den Primärregelbedarf des Netzbetreibers zu reduzieren. Jedoch könnte man die Windkraftanlage gedrosselt betreiben, also mit einer Leistung, die unterhalb derjenigen liegt, die die Windkraftanlage abgeben könnte, wenn sie optimal auf die vorhandenen Windverhältnisse eingestellt wäre. Dies müsste allerdings unter ständiger Berücksichtigung der sich ändernden Netzverhältnisse geschehen, lokal und länderübergreifend sowie den Bedürfnissen der Netzbetreiber, aber auch der Windverhältnisse entsprechend, die nun alles andere als konstant und gar hinreichend genau vorhersehbar sind.

Die Primärregelleistung z.B. bei einer Störung im Netz muss schnell aktiviert werden, um dem durch eine Störung eingeleiteten Frequenzabstieg entgegenwirken zu können, bevor die Frequenz auf einen kritischen Wert abgesunken ist. Neben der schnellen Aktivierung muss aber auch ausreichend Leistungsreserve vorgehalten werden. In Wärmekraftwerken erfolgt die Vorhaltung der Primärregelleistung durch Androsselung der Turbineneinlassventile, wobei der Netzbetreiber sicherstellt, dass die Androsselung nur zeitlich begrenzt ist und dass die vorhandene Sekundärregelleistung die Primärregelleistung rechtzeitig ablösen kann. Eine solche Androsselung stellt energetisch betrachtet keinen Verlust dar, da weniger Brennstoff verbraucht wird, der zu einem späteren Zeitpunkt dann zur Verfügung steht.

Bei einer Windkraftanlage könnte man eine Regelreserve auch durch eine solche "Androsselung" der Windenergieanlage zur Verfügung stellen, so dass die Windenergieanlage mit einer geringeren Leistung betrieben wird, als dies die Windverhältnisse zuließen. Dies bedeutet aber in einer energetischen Betrachtungsweise, dass die zur Verfügung stehende Windenergie dann nicht genutzt wird, wenn dies möglich wäre, d.h. der Wind streicht bei diesem Betrieb ungenutzt an der Windenergieanlage vorbei.

Diese Androsselung einer Windenergieanlage ist also eine sehr kostenaufwendige Maßnahme, da der nicht genutzte Teil der Energie des Windes eben nicht gespeichert wird. Bei einer Gasturbine wird im Androsselungsbetrieb hingegen Primärenergie zurückbehalten und kann zu einem späteren Zeitpunkt eingesetzt werden.

Tatsächlich sind die Verhältnisse in solchen gemischten Energieverteilersystemen so, dass die Windenergieanlagen mit ihren umrichtergespeisten Systemen bei konventioneller Arbeitsweise keinen Beitrag zur Netzstabilität und Massenträgheit des Netzes leisten. Selbst wenn Windkraftanlagen mit Umrichtern am Netz mit konstanter Leistung betrieben werden würden, so würde dies noch zur Erhöhung des notwendigen Regelbedarfs führen, was mit konventionellen Kraftwerken mit deren Primärregelleistung ausgeglichen werden müsste.

Durch die vorliegende Offenbarung soll ein Netz mit konventionellen Kraftwerken und Windenergieanlagen bzw. eine Windkraftanlage so betrieben werden, dass die Windenergieanlage Primärregelleistung zur Verfügung stellt und insbesondere soll die Windenergieanlage zur Bereitstellung von Regelleistung herangezogen werden.

Erreicht wird dies durch die in den unabhängigen Ansprüchen angegebenen Merkmale.

Erfindungsgemäß wird bereitgestellt ein Verfahren zum Betrieb mindestens einer Windenergieanlage mit einem Rotor und einem mit dem Rotor gekoppelten elektrischen Generator zum Abgeben elektrischer Leistung in ein Energieverteilungsnetz mit Hilfe einer Regeleinrichtung, die den Betrieb der Windenergieanlage in deren durch Parameter für Blattwinkel, Abgabewirkleistung und Rotordrehzahl bestimmten Arbeitsbereich sicherstellt, wobei folgende Schritte von der Regeleinrichtung ausgeführt werden:
a. Betreiben der Windenergieanlage im ungedrosselten Arbeitsbereich gemäß der besten nutzbaren Kennlinie der Windenergieanlage, wobei unter ungedrosselt gemäß der besten nutzbaren Kennlinie die bei den jeweiligen Windverhältnissen maximale Abgabewirkleistung verstanden wird;
b. Erfassen von Änderungen eines Netzbetriebsparameters des Energieverteilungsnetzes;
c. Verändern des Betriebs der Windenergieanlage, wenn eine nicht vorhergesehenen Änderung des Netzbetriebsparameters auftritt, dahingehend, dass der ungedrosselte Arbeitsbereich durch Absenken der Rotordrehzahl verlassen wird und dabei eine Wirkleistung in das Energieverteilungsnetz eingespeist wird, die um eine Übermaßleistung größer ist als die den jeweiligen Windverhältnissen entsprechende maximale Abgabewirkleistung, wobei die Übermaßleistung der kinetischen Energie des Rotors entnommen wird;
d. Zurückkehren zum Betrieb im ungedrosselten Arbeitsbereich gemäß der besten nutzbaren Kennlinie der Windenergieanlage durch Anheben der Rotordrehzahl, wenn das Ein-speisen der Übermaßleistung abgeschlossen ist;
wobei der Regeleinrichtung eine bereitzuhaltende Menge an Regelenergie vorgegeben wird, die mittels der Übermaßleistung einzuspeisen ist.

Eine Windenergieanlage, die nach diesem Verfahren gemäß der Erfindung arbeiten kann, wird in einem gewissen Arbeitsbereich betrieben. Hierunter werden die zu den aktuellen Betriebsbedingungen gehörenden Parameter. Es wird von einem Arbeitsbereich und nicht einem Arbeitspunkt gesprochen, weil die äußeren Bedingungen für eine Windenergieanlage ständigen Schwankungen unterworfen sind und somit eine so genannte dynamische Regelung erforderlich machen.

Ändert sich ein Betriebsparameter (z.B. die Netzfrequenz) um einen bestimmten vorgegebenen Wert innerhalb einer bestimmten Zeitspanne, so ist dies gemäß der Erfindung ein Kriterium, um die Windenergieanlage bzw. mehrere -anlagen so zu betreiben, dass sie eine übermäßige Leistung in das Netz einspeist bzw. einspeisen, und zwar unabhängig davon, ob zu diesem Zeitpunkt die zugehörige bzw. erforderliche Windenergie überhaupt zur Verfügung steht.

Lediglich als Beispiel und nicht zur Einschränkung sei hier eine Windenergieanlage mit 1,5 MW Leistung angeführt, bei welcher bei einer Absenkung der Drehzahl von 1800 rpm auf 1600 rpm für 10 s ca. 11 % der Nennleistung oder für 1 s ca. 100 % zusätzlich eingespeist werden kann.

Nach der Offenbarung wird eine solche Änderung des Netzbetriebes erfasst und hieraus ein Signal erzeugt, das zu Steuerungs- bzw. Regelungszwecken an der bzw. den Windenergieanlagen eingesetzt wird.

Änderungen der Betriebsparameter könnten erfindungsgemäß an irgendeiner Stelle des Netzes erfasst werden, wobei das daraus hergeleitete Signal auch distal eingesetzt werden kann, und zwar je nach den Verhältnissen und den Eigenschaften des Netzes und auch hinsichtlich der Eigenschaften der einzelnen Windenergieanlagen, nämlich mehr oder weniger Regelleistung zur Verfügung stellen zu können. Hier könnte gemäß der Erfindung so vorgegangen werden, dass ein zentraler Netzrechner die Signale so berechnet, dass die einzelnen Windenergieanlagen unterschiedlich zur Einspeisung von Regelleistung herangezogen werden, um das Netz insgesamt optimal zu betreiben. Hierbei ist gemäß der Offenbarung an eine Grenzwerterfassung durch eine Sensorik in einer Windenergieanlage oder eine zentrale Windparküberwachung oder auch an eine zentrale Netzüberwachung des Netzbetreibers bzw. Energieversorgers gedacht.

Gemäß der Offenbarung wird ein geeigneter Betriebsparameter herangezogen und dessen zeitliche Änderung bzw. Änderungsgeschwindigkeit herangezogen, vorzugsweise wird dies die Frequenzänderung bzw. -änderungsgeschwindigkeit sein, wobei zweckmäßige Grenzwerte zu Grunde gelegt werden, z.B. 0,2 Hz in einem 50 Hz-Netz und/oder 0,05 Hz/s. Abhängig von der Stabilität des Netzes ist ein ausreichend großer Totbereich erforderlich, um zu vermeiden, dass das Störungssignal zu häufig ausgelöst wird, was zu einem nennenswerten Ertragsverlust führen würde. Der für ein sehr steifes Netz wünschenswerte Grenzwert von 0,01 Hz/s kann z.B. bei einem schwachen Netz zu einem sehr häufigen Auslösen des Störsignals führen.

Die Offenbarung lässt sich auch zur Dämpfung von Netzfrequenzschwingungen anwenden. Hierzu werden in entsprechender Weise Signale an die einzelnen Windenergieanlagen gegeben, die kontinuierlich über einen längeren Zeitraum jedoch unterschiedlich, zueinander an die einzelnen Windenergieanlagen abgegeben werden. Hierzu können Prognosetools herangezogen werden, die hinreichend präzise vorhersagen können, welcher Primärregelleistungsbedarf zu welcher Zeit und an welcher Stelle des Netzes erforderlich sein wird.

Abhängig von dem in der Windenergieanlage verwendeten Umrichter- und Regelungssystem kann es erforderlich sein, zur Nutzung des vollen, mechanisch vorhandenen Potentials an Regelenergie die Auslegung des Umrichters und des Reglers mit anderen Drehzahl/Leistungskennlinien durchzuführen, als bislang üblich oder auch zusätzliche Reserve zur Leistungseinspeisung vorzuhalten. Die "Verteilung" der von einem Windpark insgesamt zur Verfügung zu stellenden Regelleistung auf die individuellen Anlagen kann von einer zentralen Netzsteuerung vorgenommen werden, die in diesem Fall z.B. auch nur eine Windparksteuerung sein kann. Alternativ kann auch jede Anlage selektiv Steuerungssignale in ihrer eigenen Reglereinheit generieren, die zu ihrem aktuellen, individuellen Anlagenzustand korrespondieren.

Erfindungsgemäß wird hierzu ein Regelalgorithmus vorgesehen, der als Reglerziel die Bereitstellung einer vorgebbaren Menge von Regelenergie vorsieht. Diese Menge kann abhängig von der im Netz eingespeisten Windenergie (von lokal in einer Windenergieanlage bis hin zu europaweit) oder auch abhängig von den Vorgaben des Energieversorgers festgelegt werden und kontinuierlichen Änderungen unterliegen. Auch kann die Windenergieanlage (oder der Windpark) die Menge an bereitzustellender Windenergie mit Hilfe eines vorgegebenen Algorithmus aus Betriebsparametern (Netzspannung, Netzfrequenz, Windgeschwindigkeit, Rotordrehzahl, etc.), ggf. unter Zuhilfenahme von Prognoseverfahren individuell bestimmen. Praktisch kann dies bei einer nicht zur Erfindung gehörenden Ausführungsform bedeuten, dass eine Windenergieanlage mit einer minimalen Rotordrehzahl von 10 rpm beispielsweise mit 14 rpm betrieben wird, obwohl der optimale Energieertrag 12 rpm wäre, weil die vorgegebene Menge an Regelenergiebedarf einer Drehzahldifferenz von 10 zu 14 rpm entspricht.

Auch wird gemäß der Offenbarung ein Verfahren zum Bereitstellen von Regelleistung bzw. Primärregelleistung für ein elektrisches Energieerzeuger- und -verteilernetz geschaffen, an welches eine Vielzahl von Kraftwerken, darunter Windenergieanlagen, angeschlossen ist und bei welchem die Regelleistung aus der kinetischen Energie der rotierenden Massen von Windenergieanlagen hergeleitet wird.

Wesentlich für die vorliegende Erfindung ist, dass für die Primärleistung in besonderen Situationen eines Netzes eine "Energiequelle angezapft worden ist", die bislang keine Beachtung fand. Eine gemäß der Erfindung betriebene Windkraftanlage kann die übermäßig abgegebene Leistung nämlich dadurch erbringen, dass die kinetische Energie ihrer bewegten Massen herangezogen wird. Dies kann nur kurzzeitig getan werden, da ansonsten die Drehzahl zu weit absinken würde und die Abschaltung der Windenergieanlage zu befürchten wäre.

Bei umrichtergespeisten Windenergieanlagen ist die abgegebene Leistung nicht unmittelbar abhängig von der Drehzahl. Da die Auslegung des Generator/Umrichtersystems nicht auf Nennleistung erfolgt, sondern gewisse Reserven für kurzzeitige Überlasten vorgesehen sind, ist es möglich, kurzfristig etwas mehr Leistung in das Netz zu speisen, als es die Windverhältnisse zulassen. Die Energie wird dann aus den rotierenden Massen (Blätter, Nabe, Triebstrang, Generator) genommen, d.h. entsprechend der Massenträgheit der Rotationsenergie nach der Beziehung ΔE = ¹/₂ θ (ω₁² - ω₂²).

Die Absenkung der Drehzahl ist damit von der Energie abhängig, die in das Netz gespeist wird. Die zulässige Drehzahlabsenkung, und damit die verfügbare Energie, die eingespeist werden kann, muss anhand der Anlagen- und Umgebungsbedingungen festgelegt werden. In welcher Form die Energie abgerufen wird, kann aber abhängig von den Bedürfnissen des Netzbetreibers festgelegt werden.

So kann eine Energieabgabe proportional zur Abweichung der Netzfrequenz erfolgen, es kann aber z.B. auch ein D-Verhalten vorgegeben werden, das bei schnellen Änderungen der Frequenz mehr einspeist.

Zum Ausregeln von Netzstörungen kann z.B. eine Schwelle festgelegt werden, z.B. wenn die Frequenz mit einer gewissen Geschwindigkeit abnimmt oder eine gewisse Grenze unterschritten hat, ab der erst reagiert wird.

Die in den rotierenden Massen einer Windenergieanlage gespeicherte kinetische Energie ist begrenzt. Die Frequenz ist aber eine Größe eines Netzes, die mit kurzer Verzögerung im gesamten Netz gemessen werden kann. Damit können auch Windenergieanlagen, die mehrere hundert Kilometer von einer Störungsstelle entfernt stehen, einen Beitrag zur Regelung leisten. Durch die große Anzahl installierter Windenergieanlagen kann auch ein kleiner Beitrag je Windenergieanlage in der Summe einen nennenswerten Effekt auf das Netz haben.

In Windparks kann eine Zuteilung der Regelleistung zu einzelnen Windenergieanlagen erfolgen. Die aus Windrichtungssicht hinten liegenden Windenergieanlagen können einen größeren Beitrag zur Regelleistung liefern, da sie in der Regel weniger ausgelastet sind. Informationen über die Windgeschwindigkeit der weiter vorn liegenden Windenergieanlagen können genutzt werden, um die verfügbaren Grenzen des Systems (erlaubtes Drehzahlband in Abhängigkeit von der kurzfristig zu erwartenden Windgeschwindigkeit) besser ausnutzen zu können. Sinnvoll ist ein Einsatz in Kombination mit einer Windprognose, um sicherzustellen, dass z.B. für die nächsten 24 Stunden ausreichend Wind vorhanden ist, damit die Rotoren aller Windenergieanlagen sich drehen und ausreichend Regelleistung vorhalten können.

Wenn notwendig kann die Drehzahl von Windenergieanlagen bei niedrigen Windgeschwindigkeiten erhöht werden, um immer über der Minimaldrehzahl des Arbeitsbereichs zu liegen.

Die besonderen Eigenschaften der Verfahren gemäß der Erfindung sind:
1. Reduzierung der zum Ausregeln von Netzfehlem notwendigen Regelreserve im Netz
2. Reduzierung von Frequenzänderungen im Netz (bzw. der zur Vermeidung von Frequenzänderungen notwendigen Regelleistung)
3. Geringere Anregung von Frequenzänderungen im Netz durch die Windenergieanlage
4. Keine bzw. geringe Ertragsverluste beim Betrieb als Notfallreserve
5. Geringe Ertragsverluste beim Dauereinsatz zur Dämpfung von Frequenzänderungen

Wesentlich zur Realisierung der vorliegenden Erfindung ist, dass die Windenergieanlagen so betrieben werden können, dass sie auf Steuerungssignale ansprechen können. Dies bedeutet, dass die Windenergieanlage auf diesen Betrieb vorbereitet ist und der Netzbetreiber sich auf die Reaktion der Windenergieanlagen beim Auftreten eines Störungssignals verlassen kann, damit die entsprechenden Wechselwirkungen eintreten können.

In der Ausführung mit von einer Zentrale gesendetem Störsignal basiert die Offenbarung auch auf einer gewissen Kooperation der Windenergieanlagen- und Netzbetreiber. Der Netzbetreiber muss die auftretenden Störungen erfassen und in Form des Störungssignals an die Windenergieanlagenbetreiber weiterleiten.

Für die Übertragung dieses Störungssignals kommen alle nur möglichen Übertragungswege in Betracht, seien diese nun leitungsgebunden oder nicht.

Die Erfindung kann nun nicht nur vorteilhaft eingesetzt werden, um eine Regelreserve zum Ausgleich von Wirkleistungsdefiziten nach Fehlern im Netz zur Verfügung zu stellen, sondern auch wenn es darum geht Dämpfungen von Oszillationen der Frequenz in elektrischen Energieverteilungsnetzen zu realisieren.

In erster Näherung ist die Änderung der Netzfrequenz ein Maß für die Differenz von eingespeister zu abgegebener Leistung. Die Größe der notwendigen Stellgrößen ist abhängig von der Massenträgheit der im Netz vorhandenen rotierenden Massen. Werden in einem elektrischen Energieverteilungsnetz Erzeuger mit hoher Massenträgheit durch solche mit niedriger Massenträgheit ersetzt, muss eine schnellere Reaktion des Regelsystems erfolgen, um eine Änderung der Netzfrequenz zu vermeiden. Ist keine schnelle Reaktion möglich, so muss entweder eine größere Frequenzabweichung zugelassen werden, oder es wird versucht, durch eine höhere Stellgröße die Frequenzabweichung zu reduzieren. Dies hat aber häufig den Nachteil eines Überschwingens und damit längerer Einregelzeiten bis die Frequenz wieder in dem gewünschten Frequenzband ist.

Um eine dauerhafte Abweichung der Netzfrequenz zu vermeiden, gehört die Regelung der Netzfrequenz zu den üblichen Aufgaben von Kraftwerken: Bei einer Frequenz oberhalb der Nennfrequenz wird die in das Netz eingespeiste Leistung reduziert und bei einer Frequenz unterhalb Nennfrequenz wird die eingespeiste Leistung erhöht. Die Reduktion oder Erhöhung der elektrischen Leistung erfolgt in der Regel durch eine Regelung der Energiezufuhr bzw. des Brennstoffs im Kraftwerk.

Die Regelung der Netzfrequenz ist eine der zentralen Anforderungen an elektrische Energieverteilungsnetze. Weicht die Netzfrequenz über eine gewisse Schwelle hinaus von der Nennfrequenz ab, werden schrittweise Verbraucher und Erzeuger ab- oder zugeschaltet.

Die für die Ausregelung der sich in Folge von Laständerungen, insbesondere aber nicht nur infolge einer Reduktion der zur Verfügung stehenden Leistung der Erzeuger schnell ergebenden Frequenzänderungen wird Regelenergie benötigt, die bereitstehen muss bis
a) das entstandene temporäre Leistungsdefizit wieder ausgeglichen oder
b) die Leistung langsamer regelbarer Erzeuger erhöht werden konnte.

Eine Reduktion der eingespeisten Leistung von Windenergieanlagen ist in der Regel einfacher möglich als eine Erhöhung der eingespeisten Leistung. Im Fall einer zeitweiligen Reduktion der eingespeisten Leistung unter die durch die vom Wind zur Verfügung gestellte Leistung bzw. die übliche maximale Leistung führt für die Dauer der Leistungsreduktion zu einem Ertragsrückgang, ohne dass dem - wie z.B. bei thermischen oder Wasserkraftwerken möglich - eine Einsparung an Primärenergie gegenübersteht.

Verfahren zur Erhöhung des Energieertrags einer Windenergieanlage durch Beeinflussung der Drehzahl sind bekannt, um möglichst schnell den optimalen Arbeitspunkt der Rotorblätter zu erreichen.

Eine Entkopplung von eingespeister Leistung und Drehzahl ist ein übliches Verfahren zur Regelung von Windenergieanlagen, z.B.
a) um eine Vergleichsmäßigung der Einspeiseleistung zu erzielen,
b) um eine Reduktion von Lasten zu erzielen, z.B. um beim Betrieb bei einem gewählten Drehzahlarbeitspunkt für die Blattwinkelregelung die Schwankungen des Moments zu reduzieren,
c) um eine konstante oder vorgegebene Einspeiseleistung zu erzielen, und
d) um insbesondere bei einem Betrieb mit konstanter Einspeisung in begrenztem Umfang kinetische Energie im Rotor zu speichern, um einen höheren Energieertrag oder reduzierte Lasten zu erzielen.

Die Veränderung der Drehzahl einer Windenergieanlage ist ein übliches Verfahren, z.B. um
a) den Energieertrag durch eine bessere aerodynamische Ausnutzung der Blätter zu erhöhen,
b) eine Reduktion von Lasten zu erzielen, u.a. auch zur Vermeidung der Anregung von Eigenfrequenzschwingungen,
c) eine Reduktion von Schallemissionen zu erzielen und um
d) sicherzustellen, dass eine Windenergieanlage auch bei starken Turbulenzen den zulässigen Betriebsbereich nicht verlässt.

Um die Leistung gegenüber einem gegebenen Arbeitspunkt zu erhöhen, muss ein Teil der verfügbaren Leistung als Reserve bereitgehalten werden. Dies führt z.B. bei thermischen oder Wasserkraftwerken in der Regel zu keinen oder geringen finanziellen Einbußen.

Die Erfindung wird nachstehend anhand der Zeichnungen beispielsweise erläutert.
- Figur 1: zeigt eine Kennlinie einer Windenergieanlage.
- Figur 2: zeigt eine Darstellung des Leistungsbeiwertes Rotorblattes einer Windenergieanlage in Abhängigkeit vom Blattwinkel und der Schnelllaufzahl.
- Figur 3: zeigt eine zeitliche Darstellung der Schwingungen der Netzfrequenz in Folge eines Lastausfalls.

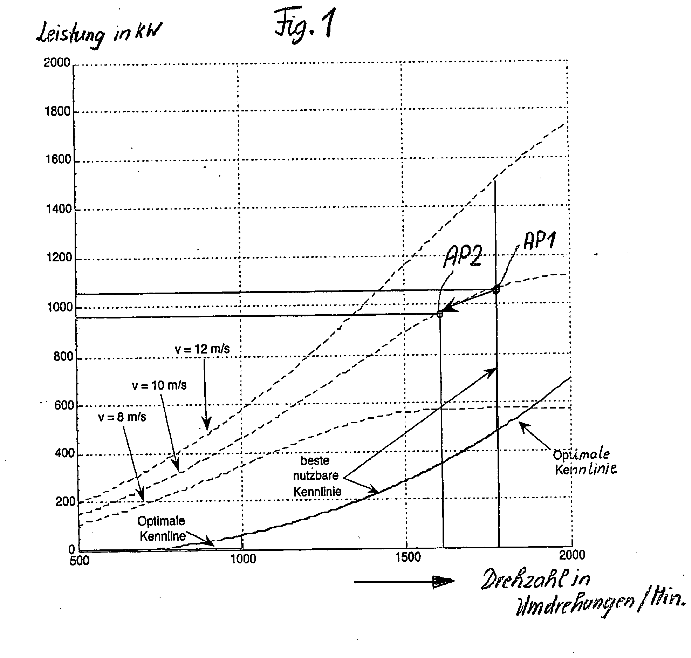

Die aerodynamischen Verhältnisse an einer Windenergieanlage führen dazu, dass es für jede Windgeschwindigkeit eine optimale Drehzahl gibt, mit der die Windenergieanlage betrieben werden sollte, um den maximalen Ertrag zu erzielen. Dies ist am Beispiel für Windgeschwindigkeiten von 8 m/s, 10 m/s und 12 m/s in Figur 1 dargestellt als Leistung in Abhängigkeit von der Drehzahl. Werden die Maxima dieser einzelnen Kurven verbunden, ergibt sich die optimale Kennlinie für den Betrieb einer Windenergieanlage ("optimale Kennlinie") mit gegebenem Rotorblatt. In der Praxis ist der verfügbare Drehzahlbereich begrenzt (im gegebenen Beispiel auf Generatordrehzahlen von 1000 bis 2000 rpm), so dass im stationären Betrieb nur Arbeitspunkte auf der mit "beste nutzbare Kennlinie" beschrifteten Kurve gewählt werden, die zunächst der optimalen Kennlinie folgt und ab der Drehzahl von 1780 rpm bei fester Drehzahl bis zur Nennleistung ansteigt.

Erfolgt im AP1 bezeichneten Arbeitspunkt (1780 rpm, 1050 kW) eine Aktivierung der Reserveieistung, so sinkt die Drehzahl der Windenergieanlage bei angenommener konstanter Windgeschwindigkeit von 10 m/s auf den Arbeitspunkt AP2 (1580 rpm, 975 kW) ab, da (befristet) mehr Leistung in das Netz gespeist wird, als durch den Wind aufgenommen werden kann.

Bei der Realisierung der Erfindung (siehe Figur 1) ist zu beachten, dass die in der Windenergieanlage gespeicherte, nutzbare Energie begrenzt ist (die Windenergieanlage darf die Untergrenze des Drehzahlbereichs nicht verlassen), und dass eine starke Drehzahlreduzierung zum Betrieb in einem schlechteren Arbeitspunkt führt. Bei einer Absenkung um 200 rpm verschiebt sich der Arbeitspunkt von AP1 nach AP2. Dort können bei gleichen Windverhältnissen bei unverändertem Blattwinkel etwa 5 % weniger Leistung aus dem Wind gewonnen werden. Eine noch weitergehende Absenkung der Drehzahl kann unter Umständen die nach dem Ende der zusätzlichen Leistungseinspeisung (in diesem Beispiel nach 10 Sekunden) verfügbare Einspeiseleistung kurzfristig deutlich reduzieren.

Durch eine Veränderung des Blattwinkels im neuen Arbeitspunkt AP2 lässt sich die Energieausbeute optimieren. Unabhängig davon kann durch modifizierte Blattentwürfe in Zukunft ein bei Arbeitspunkten abseits des Nennpunkts höherer Ertrag erzielt werden.

Die gespeicherte Energie im Rotor kann kontinuierlich überwacht werden. Dabei werden in der Regel die Anlagendrehzahl, die Windgeschwindigkeit und die nach einer Drehzahlreduzierung verbleibende mögliche Einspeisung betrachtet. Ausreichend ist es jedoch, nur die aktuelle Drehzahl zu überwachen und beim Vorliegen eines Störungssignals solange Überleistung einzuspeisen, bis die Rotordrehzahl auf die zulässige Minimaldrehzahl gefallen ist. Gibt es Vorgaben für eine minimal bereitzuhaltende Regelnergie, wird die Mindestdrehzahl der Windenergieanlage entsprechend vorgegeben, und sofern es die Windverhältnisse ermöglichen, auch eingehalten. Auf Anforderung (z.B. Spannungsabsenkung um mehr als 10 % innerhalb von 100 ms oder schnelle Frequenzänderung von mehr als 100 mHz in 1 s oder ein extern übermitteltes Signal) wird die Reserveenergie aktiviert. Eine zu definierende Leistung wird zusätzlich zu der gemäß Windenergieanlage-Kennlinie verfügbaren Energie in das Netz gespeist.

Der genaue zeitliche Verlauf der Einspeisung der Reserveenergie kann in Absprache mit dem Netzbetreiber erfolgen: kurze Zeit viel Energie, längere Zeit wenig Energie oder der Verlauf kann sich zeitlich ändern, z.B. zunächst viel, dann weniger Energie.

Die einzuspeisende Energiemenge kann direkt vorgegeben oder indirekt (z.B. über die Dauer oder nach Absinken auf eine bestimmte Drehzahl) definiert werden.

Nach Erreichen des Endes der zusätzlichen Energieeinspeisung kehrt die Windenergieanlage wieder zum alten Arbeitspunkt zurück. Es wird im Mittel nur noch maximal so viel Energie eingespeist, wie durch den Wind verfügbar ist.

Folgende Sonderfälle können in Betracht gezogen werden:

Auf Anforderung kann eine Erhöhung der Anlagendrehzahl gegenüber dem normalen Betriebspunkt erfolgen, um zusätzliche Energie für einen möglichen Fehler bereitstellen zu können.

Wenn es die Windverhältnisse zulassen (z.B. wenig Turbulenz), kann diese Erhöhung der Anlagendrehzahl auch über den Nennarbeitspunkt der Windenergieanlage hinaus erfolgen.

Bei Windgeschwindigkeiten über Nennwind kommt ein 2-stufiges Verfahren zum Einsatz
a) es erfolgt auf Anforderung zunächst sofort eine Einspeisung zusätzlicher Energie
b) durch Verstellen der Blätter hin zum optimalen Arbeitspunkt wird die Leistungsaufnahme der Windenergieanlage (sofern es die Windverhältnisse zulassen) so erhöht, dass es zu keinem weiteren Absinken der Anlagendrehzahl kommt und es wird der ursprüngliche Arbeitspunkt wieder angefahren.

Befindet sich eine Windenergieanlage in der (räumlichen) Nähe eines Kurzschlusses, so kann es sinnvoll sein, zunächst einen (großen) Teil des verfügbaren Stroms (bzw. der Leistung) der Windenergieanlage (als Blindstrom bzw. Blindleistung) zur Stützung der Netzspannung aufzuwenden (z.B. bis die Netzspannung wieder 90 % der vorherigen Spannung erreicht hat). Die Einspeisung der Reserveleistung erfolgt dann erst m Anschluss an die Wiederherstellung der Netzspannung.

Nützlich ist das oben genannte Verfahren z.B. um den kurzfristigen Ausfall von Einspeiseleistung nach einem Fehler (Kurzschluss) im Netz zu überbrücken. Windenergieanlagen bisheriger Bauart trennen sich nach einem solchen Fehler vom Netz. In der Zeit, die solche Windenergieanlagen benötigen, um wieder auf das Netz zu schalten, kann eine zusätzliche Einspeisung von Energie das Absinken der Netzfrequenz verhindern oder zumindest reduzieren, so dass die Entstehung einer kritischen Situation im Netz vermieden werden kann.

Wird weniger Leistung in das Netz gespeist als ihm durch Verbraucher entzogen wird, sinkt die Netzfrequenz. In Folge des Ausfalls von einspeisender Leistung, z.B. nach einem Kurzschluss im Netz, kann es zu einem merklichen Absinken der Netzfrequenz kommen.

Auch weit von einem Fehlerort entfernte Windenergieanlagen können die Frequenzänderung erfassen und darauf reagieren. Sinkt die Netzfrequenz z.B. um mehr als 50 mHz innerhalb von 1 Sekunde, so sollte zusätzliche Leistung in das Netz eingespeist werden.

Steigt die Netzfrequenz dann wieder an, so treten Schwingungen auf und machen eventuell eine zusätzliche Einspeisung von Reserveenergie, d.h. eine Dämpfung der Schwingung, notwendig.

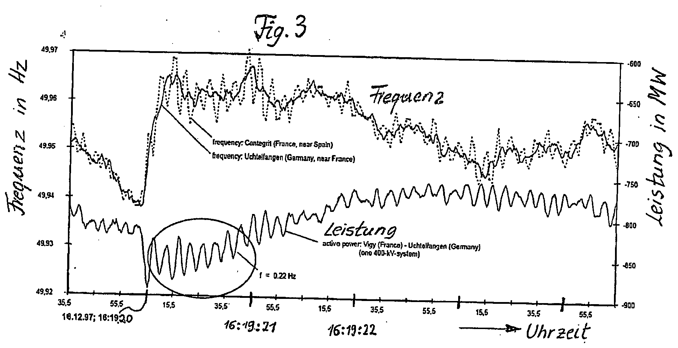

Typische Schwankungen der Netzfrequenz in Folge netzweiter Schwingungen ("Inter Area Oscillations") liegen in Europa (UCTE-Netz) zur Zeit zwischen 0,2 und 0,8 Hz. Bei dem in Figur 3 gegebenen Fall (0,22 Hz = Periodendauer 4,5 s) muss die Windenergieanlage also 2,25 Sekunden zusätzliche Leistung in das Netz einspeisen und 2,25 Sekunden die Leistungseinspeisung in das Netz reduzieren, um die Schwingung dämpfen zu können.

Soll die Drehzahl der Windenergieanlage sich (bei Nenndrehzahl) z.B. um nicht mehr als 50 rpm ändern, könnte z.B. 5 % der Augenblicksleistung für eine Dämpfung von Eigenfrequenzen des Netzes genutzt werden.

Konventionelle Konzepte der Frequenzregelung nutzen eine Androsselung (durch Verstellen des Blattwinkels bei Windenergieanlagen), um Leistungsreserven für Regelungsaufgaben bereitzuhalten.

Durch Nutzung der gespeicherten Energie kann eine Reduktion des Regelungsaufwandes bei minimaler Ertragsreduktion erzielt werden. Bei einer Frequenzregelung mit 2 % der Nennleistung kann z.B. im Betrieb oberhalb von Nennwind durch eine Anpassung des Blattwinkels (Windenergieanlage ist schon angedrosselt, um die Leistung zu begrenzen) die Leistung wieder erhöht werden. Hierbei sind natürlich die Auslegungsgrenzen der Windenergieanlage (ggf. in Abhängigkeit der aktuellen Umgebungsbedingungen) zu beachten. Unter Nennwind kann für bis zu 30 Sekunden mehr (bei abnehmender Frequenz) oder weniger (bei zunehmender Frequenz) Energie in das Netz eingespeist werden, ohne dass ein Betrieb mit angedrosselter Windenergieanlage (und damit deutlichen Ertragsverlusten) notwendig ist.

Es ist bekannt, dass die in einem Netz verfügbare, durch konventionelle Kraftwerke bereitgestellte Regelleistung nur mit einer zeitlichen Verzögerung aktiviert werden kann. Eine übliche Vorgabe ist, dass innerhalb von 5 Sekunden 50 % der verfügbaren Primärregelenergie aktiviert werden soll und erst innerhalb von 30 Sekunden die gesamte bereitgestellte Primärregelenergie verfügbar sein muss. Hier liegt ein Vorteil der Erfindung, die es ermöglicht, diese Lücke in gewissen Grenzen zu schließen, weil die Aktivierung der Reserveenergie der Windenergieanlagen innerhalb von weniger 100 ms nach Erkennung des Frequenzabfalls möglich ist.

Zwar ist die insgesamt verfügbare Energie begrenzt, sie ist jedoch geeignet, die Zeit zu überbrücken, bis
a) konventionelle Kraftwerke zusätzliche Regelleistung bereitstellen und
b) Windenergieanlagen, die z.B. sich auf Grund eines Spannungseinbruchs vom Netz getrennt haben, wieder Leistung einspeisen.

Wie aus Figur 1 ersichtlich ist, führt die Aktivierung von Reserveenergie z.B. bei einer Windgeschwindigkeit von 8 m/s auch bei einem Absinken der Drehzahl um 200 rpm nur zu einem minimalen Absinken der Leistung, die aufgrund der Aerodynamik der Rotorblätter eingespeist werden kann.

Anders ist die Situation bei hohen Windgeschwindigkeiten. Hier führt ein Absinken der Drehzahl um 200 rpm zu einem schlechteren Arbeitspunkt. Die Leistung, die in diesem Arbeitspunkt (AP2) in das Netz eingespeist werden kann, liegt deutlich unter der Leistung, die bei Nenndrehzahl eingespeist werden kann (AP1). Dies wirkt zunächst wie ein Nachteil des Verfahrens, da nach Beendigung der Reserveenergieeinspeisung weniger Leistung eingespeist werden kann als vor der Aktivierung. Bei einer genaueren Betrachtung zeigt sich jedoch, dass die Windgeschwindigkeit zeitlich und örtlich unterschiedlich ist. Wird eine größere Anzahl von Windenergieanlagen im Netz betrieben, wird es im Fall einer im Mittel hohen Windgeschwindigkeit auch eine nennenswerte Anzahl von Windenergieanlagen geben, bei denen die Windgeschwindigkeit über der Nennwindgeschwindigkeit liegt. Diese Windenergieanlagen werden schon angedrosselt betrieben, d.h. die Windverhältnisse würden eine höhere Einspeisung erlauben als durch die Windenergieanlagen eingespeist wird. Diese Windenergieanlagen können, sofern sie in der Lage sind, befristet mehr als Nennleistung in das Netz zu speisen, das Absinken der Drehzahl nach Aktivierung der Reserveenergie durch eine Veränderung des Blattwinkels nicht nur begrenzen, sondern die Drehzahl sogar wieder auf ihren ursprünglichen Wert zurückregeln. Sofern die Auslegung der Windenergieanlage das zulässt, können sie sogar längerfristig (z.B. für 30-60 Sekunden statt nur für 5 s - 10 s) 10 % mehr Leistung in das Netz einspeisen. Sie können damit z.B. so lange mehr Energie einspeisen, bis die Windenergieanlagen, die nach Beendigung der Reserveenergieeinspeisung in einen ungünstigen Arbeitspunkt betrieben werden, wieder ihren ursprünglichen Arbeitspunkt angefahren haben.

Als Beispiel einer Auslegung im Fehlerfall wird eine Windenergieanlage mit 1,5 MW Nennleistung und 70 m Rotordurchmesser zu Grunde gelegt:

Die Massenträgheit der Windenergieanlage beträgt ca. 450 kgm²,
die Nenndrehzahl ist 1780 rpm und somit ergibt sich eine kinetisch gespeicherte Energie von 7,6 MWs.

Bei Nenndrehzahl steht bei einer Absenkung der Drehzahl um 200 rpm dann eine Energie von 760 kWs zur Verfügung. Somit kann z. B. für 10 Sekunden bis zu 163 kW Leistung (bis zu 11 % der Nennleistung) oder für 5 Sekunden bis zu 22 % der Nennleistung zusätzlich eingespeist werden.

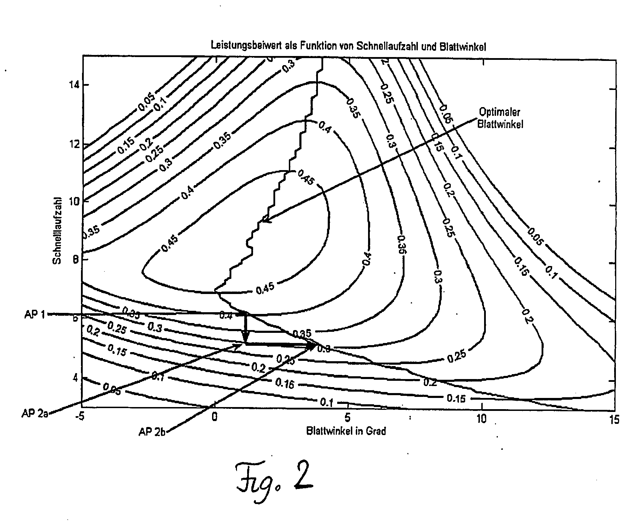

In Figur 2 ist der Leistungsbeiwert als Funktion von Blattwinkel und Schnelllaufzahl dargestellt, d.h. dem Verhältnis von Umfangsgeschwindigkeit der Blattspitze zur anströmenden Windgeschwindigkeit. Der Leistungsbeiwert beschreibt den Teil der Energie, der dem Wind durch die Rotorblätter entzogen werden kann. Höhere Werte sind daher anzustreben.

Durch das Absinken der Drehzahl in Folge der Aktivierung der Reserveenergie verändert sich der Arbeitspunkt von AP1 in Richtung AP2a. Es verschlechtert sich der Leistungsfaktor und damit sinkt die Leistung, die die Windenergieanlage aus dem Wind gewinnen kann. Durch eine Veränderung des Blattwinkels kann der Effekt aber reduziert werden, indem ein Betrieb im Arbeitspunkt AP2b angestrebt wird. Anzumerken ist, dass es im Betrieb einer Windenergieanlage keine wirklich stationären Arbeitspunkte gibt. Real variieren die Betriebsbedingungen (z.B. Windgeschwindigkeit) ständig, so dass durch eine dynamische Regelung die Windenergieanlage in einem Arbeitsbereich gefahren wird. Dies ist durch den unscharfen Verlauf des Blattwinkels in der Figur 2 angedeutet worden.

Gibt es Vorgaben für eine minimal bereitzuhaltende Energie, wird die Mindestdrehzahl der Windenergieanlage entsprechend vorgegeben, und sofern es die Windverhältnisse ermöglichen, auch eingehalten.

Sinkt die Netzfrequenz innerhalb einer Sekunde um mehr als 0,05 Hz, wird die Reserveenergie aktiviert. Die von der Windenergieanlage in das Netz eingespeiste Leistung wird kurzfristig um 10 % gegenüber der gemäß Windenergieanlagen-Kennlinie aktuell durch den Wind verfügbaren Leistung erhöht.

Die Aktivierung der Reserveenergie erfolgt für maximal 10 Sekunden. Steigt in der Zwischenzeit die Netzfrequenz wieder auf den Wert der Nennfrequenz, wird die Reserveenergieeinspeisung (vorzeitig) beendet. Nach Beendigung der zusätzlichen Energieeinspeisung kehrt die Windenergieanlage wieder zum alten Arbeitspunkt zurück. Es wird im Mittel nur noch maximal so viel Energie eingespeist, wie durch den Wind verfügbar ist.

Figur 3 zeigt ein Beispiel (Lastausfall am 16.12.1997 in Spanien: 500 MW. Messungen der Inter-Area-Schwingungen 0,22 Hz in Frankreich und Deutschland) für eine gemessene Schwingung der Netzfrequenz des Energieversorgungsnetzes, wie sie gemäß vorliegender Offenbarung gedämpft werden kann. Die untere Kurve zeigt den zeitlichen Verlauf der Leistung (Maßstab rechts). Die oberen Kurven zeigen die an zwei Orten gemessenen Frequenzen (Maßstab links), und zwar in Cantegrit (Frankreich), also in der Nähe des Ortes der Störung, und in Uchtelfangen (Deutschland), also weiter entfernt vom Ort der Störung. Typische Schwankungen der Netzfrequenz infolge netzweiter Schwingungen ("Inter Area Oscillations") liegen in Europa (UCTE-Netz) zur Zeit zwischen 0,2 und 0,8 Hz. Diese Schwingungen sind in ihrer Amplitude wenig ausgeprägt und sind teilweise nur schwach gedämpft. Durch ihre Periodizität ist es einer zentralen oder dezentralen Netzüberwachung möglich, ein auf die Schwingung synchronisiertes, gegenphasiges Regelsignal zu generieren, mit welchem die Steuereinrichtung zur Bereitstellung von kinetischer Regelenergie angesprochen wird. Im oben angegebenen Fall (0,22 Hz = Periodendauer 4,5 s) muss die Windenergieanlage also 2,25 s lang zusätzliche Leistung in das Netz einspeisen und 2,25 s lang die Leistungseinspeisung in das Netz reduzieren, um die Schwingung zu dämpfen. Durch ihre Periodizität ist bei Auswahl eines geeigneten Filters eine deutlich niedrigere Ansprechschwelle des Regelverfahrens sinnvoll, als es im Fall einer Netzstörung der Fall ist. So kann es sinnvoll sein, schon ab einer Amplitude von 0,001 Hz ein Stellsignal zu generieren, wenn die Schwingung für längere Zeit vorliegt (z.B. mehr als 5 -10 Perioden).

## Patentansprüche

1. Verfahren zum Betrieb mindestens einer Windenergieanlage mit einem Rotor und einem mit dem Rotor gekoppelten elektrischen Generator zum Abgeben elektrischer Leistung in ein Energieverteilungsnetz mit Hilfe einer Regeleinrichtung, die den Betrieb der Windenergieanlage in deren durch Parameter für Blattwinkel, Abgabewirkleistung und Rotordrehzahl bestimmten Arbeitsbereich sicherstellt, wobei folgende Schritte von der Regeleinrichtung ausgeführt werden:
a. Betreiben der Windenergieanlage im ungedrosselten Arbeitsbereich gemäß der besten nutzbaren Kennlinie der Windenergieanlage, wobei unter ungedrosselt gemäß der besten nutzbaren Kennlinie die bei den jeweiligen Windverhältnissen maximale Abgabewirkleistung verstanden wird;
b. Erfassen von Änderungen eines Netzbetriebsparameters des Energieverteilungsnetzes;
c. Verändern des Betriebs der Windenergieanlage, wenn eine nicht vorhergesehenen Änderung des Netzbetriebsparameters auftritt, dahingehend, dass der ungedrosselte Arbeitsbereich durch Absenken der Rotordrehzahl verlassen wird und dabei eine Wirkleistung in das Energieverteilungsnetz eingespeist wird, die um eine Übermaßleistung größer ist als die den jeweiligen Windverhältnissen entsprechende maximale Abgabewirkleistung, wobei die Übermaßleistung der kinetischen Energie des Rotors entnommen wird;
d. Zurückkehren zum Betrieb im ungedrosselten Arbeitsbereich gemäß der besten nutzbaren Kennlinie der Windenergieanlage durch Anheben der Rotordrehzahl, wenn das Einspeisen der Übermaßleistung abgeschlossen ist;
wobei der Regeleinrichtung eine bereitzuhaltende Menge an Regelenergie vorgegeben wird, die mittels der Übermaßleistung einzuspeisen ist.

2. Verfahren nach Anspruch 1, **dadurch gekennzeichnet, dass** eine Mindestdrehzahl bestimmt wird und das Abgeben der Übermaßleistung automatisch bei Erreichen der Mindestdrehzahl beendet wird.

3. Verfahren nach Anspruch 2, **dadurch gekennzeichnet, dass** der Betrieb der Windenergieanlage infolge eines Grenzwert- oder Störungssignals verändert wird und dass das Grenzwert- oder Störungssignal entweder lokal an der Windenergieanlage oder im Abstand zu dieser im Energieverteilungsnetz erzeugt wird.

4. Verfahren nach mindestens einem der Ansprüche 1 bis 3,
**dadurch gekennzeichnet, dass** eine Mehrzahl von Windenergieanlagen über eine Mehrzahl unterschiedlicher Signale angesteuert wird, wobei diese Signale von einer zentralen Netzsteuerung erzeugt werden können.

5. Verfahren nach mindestens einem der Ansprüche 1 bis 4,
**dadurch gekennzeichnet, dass** als Netzbetriebsparameter die Netzfrequenz und/oder die Netzspannung und/oder deren Änderungsgeschwindigkeit herangezogen wird.

6. Verfahren nach mindestens einem der Ansprüche 3 bis 5,
**dadurch gekennzeichnet, dass** das Störungssignal bei einem Frequenzabfall im Bereich unterhalb von 0,2 Hz und/oder bei einer Abnahme von über ca. 0,05 Hz in 1 s erzeugt wird.

7. Verfahren nach mindestens einem der Ansprüche 1 bis 6,
**dadurch gekennzeichnet, dass** die Übermaßleistung für eine vorgegebene Zeitspanne von ca. 0,05 bis 60 s, vorzugsweise für einige Sekunden eingespeist wird.

8. Verfahren nach mindestens einem der Ansprüche 3 bis 7,
**dadurch gekennzeichnet, dass** die Signale kontinuierlich an die Windenergieanlagen basierend auf Messungen und/oder Statistiken und/oder empirischen Daten abgegeben werden.

9. Verfahren nach mindestens einem der Ansprüche 1 bis 8,
**dadurch gekennzeichnet, dass** das Einspeisen der Übermaßleistung über eine vorgegebene Dauer oder bis zum Absinken auf eine bestimmte Drehzahl erfolgt.

10. Verfahren zum Betreiben einer Mehrzahl von Windenergieanlagen, **dadurch gekennzeichnet, dass** die einzelnen Windenergieanlagen gemäß einem der Ansprüche 1 bis 8 betrieben werden.

11. Verfahren nach Anspruch 10, **dadurch gekennzeichnet, dass** bei Überschreiten eines vorgegebenen Grenzwerts entsprechende Grenzwert- und Störungssignale kontinuierlich an die Windenergieanlagen abgegeben werden, um überregionale Netzfrequenzschwingungen oder -schwankungen zu dämpfen.

12. Verfahren nach einem der Ansprüche 10 oder 11, **dadurch gekennzeichnet, dass** Prognosewerkzeuge herangezogen werden, die das zu erwartende Angebot an Windenergie für jede einzelne Windenergieanlage, basierend auf Messungen und/oder Statistiken und/oder empirischen Daten extrapolieren.

13. Verfahren nach einem der Ansprüche 1 bis 12, **dadurch gekennzeichnet, dass** bei der Reduzierung der Drehzahl durch Einspeisen der Übermaßleistung der Blattstellwinkel so nachgeregelt wird, dass er für die vorliegenden Wind- und Drehzahlverhältnisse die optimale Leistungsaufnahme aus dem Wind ermöglicht.

14. Verfahren nach mindestens einem der Ansprüche 10 bis 13, **dadurch gekennzeichnet, dass** ein Störungssignal bei einem Frequenzabfall im Bereich zwischen 0,01 Hz und 0,2 Hz in 1 s erzeugt wird, vorzugsweise bei 0,05 Hz pro s.

15. Windenergieanlage mit einem Rotor, einem mit dem Rotor gekoppelten elektrischen Generator und einem Umrichter zum Abgeben elektrischer Leistung in ein Energieverteilungsnetz mit Hilfe einer Regeleinrichtung, wobei die Regeleinrichtung dazu ausgebildet ist:
a. die Windenergieanlage im ungedrosseltem Arbeitsbereich gemäß der besten nutzbaren Kennlinie der Windenergieanlage zu betreiben, wobei der Arbeitsbereich bestimmt ist durch Parameter für Blattwinkel, Abgabewirkleistung und Rotordrehzahl, und wobei unter ungedrosselt gemäß der besten nutzbaren Kennlinie die bei den jeweiligen Windverhältnissen maximale Abgabewirkleistung verstanden wird;
b. Änderungen eines Netzbetriebsparameters des Energieverteilungsnetzes zu erfassen;
c. den Betrieb der Windenergieanlage bei Auftreten einer nicht vorhergesehenen Änderung des Netzbetriebsparameters dahingehend zu verändern, dass der ungedrosselte Arbeitsbereich durch Absenken der Rotordrehzahl verlassen wird und dabei eine Wirkleistung in das Energieverteilungsnetz eingespeist wird, die um eine Übermaßleistung größer ist als die den jeweiligen Windverhältnissen entsprechende maximale Abgabewirkleistung, wobei die Übermaßleistung der kinetischen Energie des Rotors entnommen wird;
d. zum Betrieb im ungedrosselten Arbeitsbereich gemäß der besten nutzbaren Kennlinie der Windenergieanlage zurückzukehren durch Anheben der Rotordrehzahl, wenn das Einspeisen der Übermaßleistung abgeschlossen ist;
wobei der Regeleinrichtung eine bereitzuhaltende Menge an Regelenergie vorgegeben ist, die mittels der Übermaßleistung einzuspeisen ist.

## Claims

1. Method for operating at least one wind turbine with a rotor and an electric generator coupled to the rotor for delivering electrical power into an energy distribution system with the aid of a control device which ensures that the wind turbine operates within its operating range determined by parameters for blade pitch angle, effective output power and rotational rotor speed, the following steps being carried out by the control device:
a. operating the wind turbine in the unthrottled operating range according to the best usable characteristic of the wind turbine, unthrottled according to the best usable characteristic being understood to be the maximum effective output power at the respective wind conditions;
b. detecting changes of a system operating parameter of the energy distribution system;
c. changing the operation of the wind turbine if an unforeseen change of the system operating parameter occurs, to the extent that the unthrottled operating range is left by lowering the rotational rotor speed and, in doing so, an effective power is fed into the energy distribution system which is greater by an excessive power than the maximum effective output power corresponding to the respective wind conditions, the excessive power being taken from the kinetic energy of the rotor;
d. returning to operation in the unthrottled operating range according to the best usable characteristic of the wind turbine by raising the rotational rotor speed when the feeding-in of the excessive power is concluded;
wherein an amount of control energy to be kept available, which is to be fed in by means of the excessive power, is predetermined for the control device.

2. Method according to Claim 1, **characterized in that** a minimum rotational speed is determined and the taking-off of the excessive power is automatically ended when the minimum rotational speed is reached.

3. Method according to Claim 2, **characterized in that** the operation of the wind turbine is changed as a result of a limit value or fault signal and **in that** the limit value or fault signal is generated either locally at the wind turbine or at a distance from this in the energy distribution system.

4. Method according to at least one of Claims 1 to 3, **characterized in that** a multiplicity of wind turbines is driven via a multiplicity of different signals, wherein these signals can be generated by a central system control.

5. Method according to at least one of Claims 1 to 4, **characterized in that** the system frequency and/or the system voltage and/or its rate of change are used as system operating parameters.

6. Method according to at least one of Claims 3 to 5, **characterized in that** the fault signal is generated at a frequency drop within a range of below 0.2 Hz and/or with a decrease of above approx. 0.05 Hz in 1 s.

7. Method according to at least one of Claims 1 to 6, **characterized in that** the excessive power is fed in for a predetermined period of time of approx. 0.05 to 60 s, preferably for a few seconds.

8. Method according to at least one of Claims 3 to 7, **characterized in that** the signals are continuously delivered to the wind turbines on the basis of measurements and/or statistics and/or empirical data.

9. Method according to at least one of Claims 1 to 8, **characterized in that** the excessive power is fed in over a predetermined period or until there is a drop to a certain rotational speed.

10. Method for operating a multiplicity of wind turbines, **characterized in that** the individual wind turbines are operated in accordance with one of Claims 1 to 8.

11. Method according to Claim 10, **characterized in that** when a predetermined limit value is exceeded, corresponding limit value and fault signals are continuously delivered to the wind turbines in order to dampen inter-area system frequency oscillations or fluctuations.

12. Method according to one of Claims 10 and 11, **characterized in that** prognostic tools are utilized for extrapolating the offer of wind energy to be expected for each individual wind turbine on the basis of measurements and/or statistics and/or empirical data.

13. Method according to one of Claims 1 to 12, **characterized in that** when the rotational speed is reduced by feeding in the excessive power, the blade pitch angle is corrected in such a manner that it enables the optimum power to be taken from the wind for the prevailing wind and rotational speed conditions.

14. Method according to at least one of Claims 10 to 13, **characterized in that** a fault signal is generated at a frequency drop within the range between 0.01 Hz and 0.2 Hz in 1 s, preferably at 0.05 Hz per s.

15. Wind turbine with a rotor, an electric generator coupled to the rotor and a converter for delivering electrical power into an energy distribution system with the aid of a control device, the control device being constructed for:
a. operating the wind turbine in the unthrottled operating range according to the best usable characteristic of the wind turbine, the operating range being determined by parameters for blade pitch angle, effective output power and rotational rotor speed, and unthrottled according to the best usable characteristic being understood to be the maximum effective output power at the respective wind conditions;
b. detecting changes of a system operating parameter of the energy distribution system;
c. changing the operation of the wind turbine on occurrence of an unforeseen change of the system operating parameter to the extent that the unthrottled operating range is left by lowering the rotational rotor speed and, in doing so, an effective power is fed into the energy distribution system which is greater by an excessive power than the maximum effective output power corresponding to the respective wind conditions, the excessive power being taken from the kinetic energy of the rotor;
d. returning to operation in the unthrottled operating range according to the best usable characteristic of the wind turbine by raising the rotational rotor speed when the feeding-in of the excessive power is concluded;
wherein an amount of control energy to be kept available, which is to be fed in by means of the excessive power, is predetermined for the control device.

## Revendications

1. Procédé pour faire fonctionner au moins une éolienne comportant un rotor et un générateur électrique couplé au rotor pour délivrer de la puissance électrique dans un réseau de distribution d'énergie à l'aide d'un système de commande automatique qui garantit le fonctionnement de l'éolienne dans sa zone d'opération déterminée par les paramètres de l'angle de pale, de la puissance active de délivrance et du nombre de tours du rotor, le système de commande automatique exécutant les étapes suivantes:
a. le fonctionnement de l'éolienne dans la zone d'opération non bridée selon la meilleure courbe caractéristique utilisable de l'éolienne, sachant que l'on entend, par « non bridée selon la meilleure courbe caractéristique utilisable », la puissance active de délivrance maximale dans les conditions de vent respectives;
b. le relevé de modifications d'un paramètre d'exploitation du réseau de distribution d'énergie;
c. la modification du fonctionnement de l'éolienne lorsqu'une modification imprévue du paramètre d'exploitation du réseau apparaît de manière que la zone d'opération non bridée est quittée par la réduction du nombre de tours du rotor et qu'une puissance active est introduite à cette occasion dans le réseau de distribution d'énergie, puissance qui est supérieure, d'une puissance excessive, à la puissance active de délivrance maximale correspondant aux conditions de vent respectives, la puissance excessive étant prélevée de l'énergie cinétique du rotor;
d. le retour au fonctionnement dans la zone d'opération non bridée selon la meilleure courbe caractéristique utilisable de l'éolienne par l'augmentation du nombre de tours du rotor lorsque l'introduction de la puissance excessive est achevée;
dans lequel, au système de commande automatique, est imposé une quantité d'énergie de commande à tenir à disposition, qui est introduite au moyen de la puissance excessive.

2. Procédé selon la revendication 1, **caractérisé en ce qu'**un nombre de tours minimal est déterminé et que la transmission de la puissance excessive est automatiquement stoppée lorsque le nombre de tours minimal est atteint.

3. Procédé selon la revendication 2, **caractérisé en ce que** le fonctionnement de l'éolienne est modifié à la suite d'un signal de valeur limite ou de dysfonctionnement et **en ce que** le signal de valeur limite ou de dysfonctionnement est produit soit localement sur l'éolienne soit à distance de celle-ci, dans le réseau de distribution d'énergie.

4. Procédé selon au moins l'une quelconque des revendications 1 à 3, **caractérisé en ce qu'**une pluralité d'éoliennes est commandée par le biais d'une pluralité de signaux différents, ces signaux pouvant être produits par une commande réseau centrale.

5. Procédé selon au moins l'une quelconque des revendications 1 à 4, **caractérisé en ce qu'**on utilise, comme paramètre d'exploitation de réseau, la fréquence réseau et/ou la tension réseau et/ou leur vitesse de modification.

6. Procédé selon au moins l'une quelconque des revendications 3 à 5, **caractérisé en ce que** le signal de dysfonctionnement est produit lors d'une chute de fréquence située dans une plage en dessous de 0,2 Hz et/ou lors d'une réduction de plus de 0,05 Hz en 1 s environ.

7. Procédé selon au moins l'une quelconque des revendications 1 à 6, **caractérisé en ce que** la puissance excessive est introduite pendant un intervalle prédéfini compris entre environ 0,05 et 60 s, de préférence pendant quelques secondes.

8. Procédé selon au moins l'une quelconque des revendications 3 à 7, **caractérisé en ce que** les signaux sont transmis en continu aux éoliennes, sur la base de mesures et/ou de statistiques et/ou de données empiriques.

9. Procédé selon au moins l'une quelconque des revendications 1 à 8, **caractérisé en ce que** l'introduction de la puissance excessive se fait sur une durée prédéfinie ou jusqu'à abaissement à un nombre de tours déterminé.

10. Procédé pour faire fonctionner une pluralité d'éoliennes, **caractérisé en ce que** les différentes éoliennes sont exploitées selon l'une quelconque des revendications 1 à 8.

11. Procédé selon la revendication 10, **caractérisé en ce que**, en cas de dépassement d'une valeur limite prédéfinie, des signaux de valeur limite et de dysfonctionnement correspondants sont transmis en continu aux éoliennes pour amortir les vibrations ou les variations de fréquence réseau interrégionales.

12. Procédé selon l'une quelconque des revendications 10 ou 11, **caractérisé en ce qu'**on utilise des outils de pronostic qui extrapolent l'offre prévisible en énergie éolienne pour chacune des éoliennes, sur la base de mesures et/ou de statistiques et/ou de données empiriques.

13. Procédé selon l'une quelconque des revendications 1 à 12, **caractérisé en ce que**, lors de la réduction du nombre de tours par l'introduction de la puissance excessive, l'angle de réglage de pale est ajusté de telle sorte qu'il permet une puissance absorbée optimale à partir du vent pour les conditions existantes relatives au vent et au nombre de tours.

14. Procédé selon au moins l'une quelconque des revendications 10 à 13, **caractérisé en ce qu'**un signal de dysfonctionnement est produit lors d'une chute de fréquence située dans une plage comprise entre 0,01 Hz et 0,2 Hz en 1 s, de préférence à 0,05 Hz par sec.

15. Éolienne comportant un rotor, un générateur électrique couplé au rotor et un convertisseur pour délivrer de la puissance électrique dans un réseau de distribution d'énergie à l'aide d'un système de commande automatique, le système de commande automatique étant conçu pour:
a. faire fonctionner l'éolienne dans la zone d'opération non bridée selon la meilleure courbe caractéristique utilisable de l'éolienne, la zone d'opération étant déterminée par des paramètres pour l'angle de pale, la puissance active de délivrance et le nombre de tours du rotor et sachant que l'on entend, par « non bridée selon la meilleure courbe caractéristique utilisable », la puissance active de délivrance maximale dans les conditions de vent respectives;
b. relever les modifications d'un paramètre d'exploitation du réseau de distribution d'énergie;
c. modifier le fonctionnement de l'éolienne lors de l'apparition d'une modification imprévue du paramètre d'exploitation du réseau de façon que la zone d'opération non bridée soit quittée par l'abaissement du nombre de tours du rotor et qu'une puissance active soit introduite à cette occasion dans le réseau de distribution d'énergie, puissance active qui est supérieure d'une puissance excessive à la puissance active de délivrance maximale correspondant aux conditions de vent respectives, la puissance excessive étant prélevée de l'énergie cinétique du rotor;
d. pour retourner au fonctionnement dans la zone d'opération non bridée selon la meilleure courbe caractéristique utilisable de l'éolienne par l'augmentation du nombre de tours du rotor lorsque l'introduction de la puissance excessive est achevée;
dans lequel, au système de commande automatique, est imposée une quantité d'énergie de commande à tenir à disposition, qui est introduite au moyen de la puissance excessive.
